# EUROPÄISCHE PATENTANMELDUNG

(11) **EP 4 002 647 A1**
(43) Veröffentlichungstag der Anmeldung: **25.05.2022**
(21) Anmeldenummer: 20207079.3
(22) Anmeldetag: 12.11.2020
(51) Int. Cl.: H02K 1/18, H02K 5/24

(54) **ELEKTRISCHE MASCHINE UND WINDKRAFTANLAGE**

(71) Anmelder: Siemens Aktiengesellschaft, 80333 München (DE)
(72) Erfinder: Friedl, Daniel, 94081 Fürstenzell (DE); Garhammer, Thomas, 94124 Buechlberg (DE); Gruber, Robert, 94099 Ruhstorf (DE); Keceli Mesaros, Akos, 24400 Senta (RS); Memminger, Oliver, 94127 Neuburg a. Inn (DE); Ortmeier, Günther, 94099 Ruhstorf a. d. Rott (DE); Schifferer, Klaus, 94152 Neuhaus am Inn (DE); Toldi, Laslo, 24000 Subotica (RS); Vogel, Anatoli, 94032 Passau (DE)
(74) Vertreter: Michalski Hüttermann & Partner Patentanwälte mbB

(57) **Zusammenfassung**

Die Erfindung betrifft eine elektrische Maschine (20), insbesondere einen elektrischen Generator für eine Windkraftanlage (21), aufweisend einen hohlzylinderförmigen Stator (1), zumindest zwei Aufnahmeelemente (2), wobei das jeweilige Aufnahmeelement (2) den Stator (1) jeweils in Umfangsrichtung (15) entlang einer jeweiligen inneren Abdeckungslänge (3) zumindest teilweise umschließt und wobei das jeweilige Aufnahmeelement (2) in Umfangsrichtung (15) entlang einer jeweiligen inneren Befestigungslänge (4) drehfest mit dem Stator (1) verbunden ist, und ein Statorgehäuse (5), wobei das Statorgehäuse (5) das jeweilige Aufnahmeelement (2) in Umfangsrichtung (15) entlang einer jeweiligen äußeren Abdeckungslänge (6) zumindest teilweise umschließt und wobei das Statorgehäuse (5) in Umfangsrichtung (15) entlang einer jeweiligen äußeren Befestigungslänge (7) drehfest mit dem jeweiligen Aufnahmeelement (2) verbunden ist. Ferner betrifft die Erfindung eine Windkraftanlage aufweisend eine derartige eine elektrische Maschine (20).

Um eine verbesserte elektrische Maschine bzw. Windkraftanlage bereitzustellen, wird vorgeschlagen, dass sich die jeweilige innere Befestigungslänge (4) höchstens entlang der Hälfte der jeweiligen inneren Abdeckungslänge (3) erstreckt und/oder sich die jeweilige äußere Befestigungslänge (7) höchstens entlang von zwei Dritteln der jeweiligen äußeren Abdeckungslänge (6) erstreckt.

## Beschreibung

Die Erfindung betrifft eine elektrische Maschine, insbesondere einen elektrischen Generator für eine Windkraftanlage, aufweisend einen hohlzylinderförmigen Stator, zumindest zwei Aufnahmeelemente, wobei das jeweilige Aufnahmeelement den Stator jeweils in Umfangsrichtung entlang einer jeweiligen inneren Abdeckungslänge zumindest teilweise umschließt und wobei das jeweilige Aufnahmeelement in Umfangsrichtung entlang einer jeweiligen inneren Befestigungslänge drehfest mit dem Stator verbunden ist, und ein Statorgehäuse, wobei das Statorgehäuse das jeweilige Aufnahmeelement in Umfangsrichtung entlang einer jeweiligen äußeren Abdeckungslänge zumindest teilweise umschließt und wobei das Statorgehäuse in Umfangsrichtung entlang einer jeweiligen äußeren Befestigungslänge drehfest mit dem jeweiligen Aufnahmeelement verbunden ist. Insbesondere betrifft die Erfindung eine derartig ausgestaltete dynamoelektrische Maschine.

Weiterhin betrifft die Erfindung eine Windkraftanlage aufweisend eine derartige elektrische Maschine.

Eine derartige elektrische Maschine bzw. eine derartige Windkraftanlage kommen beispielsweise bei der Wandlung der Energie des Windes in elektrische Energie zum Einsatz, um diese Energie dann in ein Stromnetz einzuspeisen. Solche elektrischen Maschinen weisen dabei einen im Stator drehbar gelagerten Rotor auf.

Durch Kosten- und Bauraumoptimierung und steigende Leistungsanforderungen der Windkraftanlagen werden die Generatoren und ihre Komponenten immer kompakter. Dies führt dazu, dass bei gleichbleibender Baugröße und höherer Leistung die Ständergehäuse bzw. Statorgehäuse ein geringeres Gewicht haben und höheren Betriebslasten ausgesetzt sind.

Dabei werden die vom Statorpaket angeregten Schwingungen und Betriebslasten, welche durch magnetischen Zug verursacht werden, ins Gehäuse eingeleitet. Dadurch verstärkt sich wiederum das Schwingungsverhalten, so dass die Betriebsgeräusche der Generatoren zunehmen und die maximalen Werte der Kundenanforderungen übersteigen.

Eine Aufgabe der Erfindung ist es, eine elektrische Maschine bzw. eine Windkraftanlage bereitzustellen, welche insbesondere die genannten Nachteile überwindet.

Eine Lösung der Aufgabe ergibt sich durch eine elektrische Maschine der eingangs genannten Art dadurch, dass sich die jeweilige innere Befestigungslänge höchstens entlang der Hälfte der jeweiligen inneren Abdeckungslänge erstreckt und/oder sich die jeweilige äußere Befestigungslänge höchstens entlang von zwei Dritteln der jeweiligen äußeren Abdeckungslänge erstreckt.

Weiterhin ergibt sich eine Lösung der Aufgabe durch eine Windkraftanlage der eingangs genannten Art dadurch, dass die Windkraftanlage die vorgeschlagene elektrische Maschine aufweist.

Die vorgeschlagene elektrische Maschine weist somit von radial innen nach radial außen den hohlzylinderförmigen Stator, dann das jeweilige Aufnahmeelement und schließlich das Statorgehäuse auf. Dabei sind der Stator, das jeweilige Aufnahmeelement und das Statorgehäuse jeweils drehfest miteinander verbunden. Üblicherweise ist innerhalb des Stators der drehbar gelagerte Rotor der elektrischen Maschine angeordnet, welcher jedoch als für das Wesen der Erfindung nicht wesentlich angesehen wird.

Das jeweilige Aufnahmeelement kann den Stator dabei in Umfangsrichtung vollständig umschließen, sodass sich die innere Abdeckungslänge über den vollen Umfang von 360° erstreckt. Denkbar ist auch, dass das jeweilige Aufnahmeelement den Stator lediglich teilweise umschließt, zum Beispiel zu drei Vierteln oder zwei Dritteln, sodass sich die innere Abdeckungslänge entsprechend über 270° bzw. 240° erstreckt. Das jeweilige Aufnahmeelement und der Stator sind dabei entlang einer jeweiligen inneren Befestigungslänge miteinander verbunden.

Das Statorgehäuse kann wiederum das jeweilige Aufnahmeelement in Umfangsrichtung vollständig umschließen, sodass sich die äußere Abdeckungslänge über den vollen Umfang von 360° erstreckt. Auch hier ist denkbar, dass das Statorgehäuse das jeweilige Aufnahmeelement lediglich teilweise umschließt, zum Beispiel zu zwei Dritteln oder zur Hälfte, sodass sich die äußere Abdeckungslänge entsprechend über 240° bzw. 180° erstreckt. Das Statorgehäuse und das jeweilige Aufnahmeelement sind dabei entlang einer jeweiligen äußeren Befestigungslänge miteinander verbunden.

Die Aufnahmeelemente sind dabei in axialer Richtung versetzt zueinander angeordnet. Das Statorgehäuse kann insb. mehrteilig ausgestaltet sein, wobei sich die jeweilige äußere Abdeckungslänge und die jeweilige äußere Befestigungslänge insb. auf das zusammengesetzte, mehrteilige Statorgehäuse beziehen.

Die vorgeschlagene elektrische Maschine kann dabei gemäß zwei Varianten ausgebildet sein, die auch miteinander kombiniert werden können. Gemäß der ersten Variante ist die jeweilige innere Befestigungslänge höchstens halb so groß wie die jeweilige innere Abdeckungslänge. Erstreckt sich die innere Abdeckungslänge über den vollen Umfang von 360°, so ist also gemäß dieser ersten Variante vorgesehen, dass sich die innere Befestigungslänge höchstens über den halben Umfang, d. h. 180°, erstreckt. Das bedeutet, dass das jeweilige Aufnahmeelement und der Stator höchstens in Umfangsrichtung entlang 180° miteinander verbunden sind und wiederum in Umfangsrichtung mindestens über 180° nicht miteinander verbunden sind.

Lediglich zur besseren Veranschaulichung sei der folgende Vergleich mit einer Felge eines Autos erlaubt. Die Innenseite der Felge würde dabei dem Stator entsprechen und die Außenseite der Felge dem jeweiligen Aufnahmeelement. Die Innenseite und die Außenseite der Felge sind üblicherweise mittels mehrerer Speichen miteinander verbunden, wobei die Speichen in Umfangsrichtung breiter oder schmaler ausgestaltet sein können. Die innere Abdeckungslänge von 360° bedeutet in dieser Analogie, dass die Außenseite der Felge die Innenseite vollständig umschließt. Die innere Befestigungslänge von höchstens 180° bedeutet, dass die Abdeckung der Speichen zusammengenommen höchstens den halben Umfang ausmachen, sodass zwischen den Speichen - wiederum aufaddiert in Umfangsrichtung - Aussparungen über mindestens den halben Umfang angeordnet sind.

Wird die innere Abdeckungslänge kleiner gewählt, zum Beispiel drei Viertel des vollen Umfangs bzw. 270°, so verbleibt für die innere Befestigungslänge in Umfangsrichtung ein entsprechend kleinerer Abschnitt, hier z.B. höchstens 135°.

Gemäß der zweiten Variante ist die jeweilige äußere Befestigungslänge höchstens so groß wie zwei Drittel die jeweiligen äußeren Abdeckungslänge. Erstreckt sich die äußere Abdeckungslänge über den vollen Umfang von 360°, so ist also gemäß dieser zweiten Variante vorgesehen, dass sich die äußere Befestigungslänge höchstens über zwei Drittel des Umfangs, d. h. 240°, erstreckt. Das bedeutet, dass das Statorgehäuse und das jeweilige Aufnahmeelement höchstens in Umfangsrichtung entlang 240° miteinander verbunden sind und wiederum in Umfangsrichtung mindestens über 120° nicht miteinander verbunden sind.

Wird die äußere Abdeckungslänge kleiner gewählt, zum Beispiel drei Viertel des vollen Umfangs bzw. 270°, so verbleibt für die äußere Befestigungslänge in Umfangsrichtung ein entsprechend kleinerer Abschnitt, hier z.B. höchstens 90°.

Besonders gute Ergebnisse lassen sich erzielen, wenn die beiden Varianten kombiniert werden, d. h. dass sich die jeweilige innere Befestigungslänge höchstens entlang der Hälfte der jeweiligen inneren Abdeckungslänge erstreckt und dass sich gleichzeitig die jeweilige äußere Befestigungslänge höchstens entlang von zwei Dritteln der jeweiligen äußeren Abdeckungslänge erstreckt.

Insbesondere ist die vorgeschlagene elektrischen Maschine als dynamoelektrische Maschine ausgestaltet.

Die Lösung gelingt somit gemäß der ersten Variante, indem die Kontaktflächen vom Stator bzw. Statorpaket zum jeweiligen Aufnahmeelement bzw. Paketaufnahmering reduziert wird. Der Stator bzw. Statorpaket wird somit nur stellenweise mit dem jeweiligen Aufnahmeelement bzw. Paketaufnahmering verbunden. Weiterhin gelingt die Lösung gemäß der zweiten Variante, in dem die Kontaktfläche vom jeweiligen Aufnahmeelement bzw. von der jeweiligen Paketaufnahme zum Statorgehäuse reduziert wird. Das jeweilige Aufnahmeelement bzw. der jeweilige Paketaufnahmering wird somit nur stellenweise mit dem Statorgehäuse verbunden. Wie bereits erwähnt, lassen sich besonders gute Ergebnisse erzielen, in dem die beiden genannten Kontaktflächen reduziert werden.

Die vorgeschlagene elektrische Maschine hat dabei insbesondere vorteilhafte Schwingungseigenschaften und kann daher mit leiseren Betriebsgeräuschen betrieben werden. Dies kommt unter anderem auch dadurch zustande, dass der Stator während des Betriebs pulsiert und schwingt und dabei Geräusche erzeugt, die an das Gehäuse übertragen werden können und dabei versteckt werden könnten. Durch die oben erläuterte Reduktion der Kontaktfläche(n) wird zum einen die direkte Übertragung der Schwingungen des Stators an das jeweilige Aufnahmeelement und schließlich an das Statorgehäuse erschwert. Zum anderen wird dadurch eine freiere Schwingung des Stators gegenüber des jeweiligen Aufnahmeelementes bzw. des jeweiligen Aufnahmeelementes gegenüber dem Stator Gehäuse ermöglicht.

Beispielsweise kann die jeweilige innere Befestigungslänge bzw. können jeweilige innere Befestigungsabschnitte zumindest überwiegend im Bereich eines jeweiligen Schwingungsknotens des während einer vorgebbaren Drehzahl betriebenen und damit schwingenden Stators angeordnet sein. Alternativ oder zusätzlich kann die jeweilige äußere Befestigungslänge bzw. können jeweilige äußere Befestigungsabschnitte im Bereich eines jeweiligen Schwingungsbauches des während einer vorgebbaren Drehzahl betriebenen und damit schwingenden Stators angeordnet sein. Die inneren und äußeren Befestigungsabschnitte werden dabei weiter unten noch genauer erläutert. Je nach Auslegung der elektrischen Maschine ist dabei auch denkbar, dass die jeweilige innere Befestigungslänge bzw. können jeweilige innere Befestigungsabschnitte zumindest überwiegend im Bereich eines jeweiligen Schwingungsbauches und/oder die jeweilige äußere Befestigungslänge bzw. können jeweilige äußere Befestigungsabschnitte im Bereich eines jeweiligen Schwingungsknotens des während einer vorgebbaren Drehzahl betriebenen und damit schwingenden Stators angeordnet sind.

Die vorgeschlagene elektrische Maschine hat bspw. den Vorteil, dass das Statorgehäuse mit geringeren Blechdicken bei steigender Baugröße ausgeführt werden kann und dass auf zusätzliche Versteifungsrippen zumindest teilweise verzichtet werden kann. Dadurch spiegelt sich ein Kostenvorteil wider. Dadurch lassen sich weiterhin steigende Baugrößen und Leistungen realisieren bei gleichzeitiger Einhaltung der kundenseitig tolerierten Schwingungsstärken und Geräuschwerte.

Bei einer vorteilhaften Ausgestaltung der Erfindung ist das jeweilige Aufnahmeelement als Aufnahmering ausgestaltet, welcher den Stator in Umfangsrichtung vollständig umschließt. Durch die Ausformung des jeweiligen Aufnahmeelementes als Aufnahmering lassen sich gute schwingungstechnische Eigenschaften erzielen, wobei gleichzeitig noch eine ausreichend große mechanische Stabilität erreicht wird, welche für die Übertragung großer Drehmomente vom Stator an das Statorgehäuse erforderlich ist.

Bei einer weiteren vorteilhaften Ausgestaltung der Erfindung ist das jeweilige Aufnahmeelement in Umfangsrichtung entlang der jeweiligen inneren Befestigungslänge mit dem Stator mechanisch lösbar und/oder formschlüssig verbunden ist.

Die mechanisch lösbare Verbindung lässt sich bspw. durch eine Verschraubung des jeweiligen Aufnahmeelementes mit dem Stator erreichen, wobei sich verschraubte Bereiche in Umfangsrichtung entlang der jeweiligen inneren Befestigungslänge erstrecken. Bspw. kann eine Verbindung des jeweiligen Aufnahmeelementes mit dem Stator bspw. durch Zylinderstifte erreicht bzw. gesichert werden. Das Drehmoment kann dann von den Zylinderstiften übertragen werden. Alternativ wäre auch ein Schrumpfsitz als formschlüssige Verbindung denkbar.

Bei einer weiteren vorteilhaften Ausgestaltung der Erfindung ist das Statorgehäuse in Umfangsrichtung entlang der jeweiligen äußeren Befestigungslänge mit dem jeweiligen Aufnahmeelement mechanisch lösbar oder stoffschlüssig verbunden, insbesondere verschweißt, ist.

Analog zu der zuvor erläuterten vorteilhaften Ausgestaltung, kann die mechanisch lösbare Verbindung durch eine Verschraubung des Statorgehäuses mit dem jeweiligen Aufnahmeelement erreicht werden, wobei sich verschraubte Bereiche in Umfangsrichtung entlang der jeweiligen äußeren Befestigungslänge erstrecken. Alternativ kann eine stoffschlüssige Verbindung des Statorgehäuses mit dem jeweiligen Aufnahmeelement vorgesehen sein, insbesondere eine Verschweißung, welche sich in Umfangsrichtung entlang der jeweiligen äußeren Befestigungslänge erstreckt.

Bei einer weiteren vorteilhaften Ausgestaltung der Erfindung erstreckt sich die jeweilige innere Befestigungslänge höchstens entlang 120°, insbesondere entlang 50° bis 80°, in Umfangsrichtung.

Bei einer jeweiligen inneren Befestigungslänge von höchstens 120° lassen sich noch genügend große Drehmomente zuverlässig von dem Stator zum jeweiligen Aufnahmeelement übertragen. Außerdem kann damit gleichzeitig eine ausreichende Reduktion der Übertragung von Statorschwingungen an das jeweilige Aufnahmeelement und somit eine ausreichende Reduktion von Betriebsgeräuschen erreicht werden. Besonders gute Ergebnisse lassen sich erzielen, wenn sich die jeweilige innere Befestigungslänge in Umfangsrichtung entlang 50° bis 80°, bspw. etwa 70°, erstreckt. Vorzugsweise umschließt dabei das jeweilige Aufnahmeelement den Stator in Umfangsrichtung vollständig.

Bei einer weiteren vorteilhaften Ausgestaltung der Erfindung erstreckt sich die jeweilige äußere Befestigungslänge höchstens entlang 200°, insbesondere entlang 60° bis 200° bzw. 80° bis 120°, in Umfangsrichtung.

Bei einer jeweiligen äußeren Befestigungslänge von höchstens 200° lassen sich wiederum noch genügend große Drehmomente zuverlässig von dem jeweiligen Aufnahmeelement an das Statorgehäuse übertragen. Außerdem kann damit gleichzeitig auch eine ausreichende Reduktion der Übertragung von Schwingungen des jeweiligen Aufnahmeelementes an das Statorgehäuse und somit eine ausreichende Reduktion von Betriebsgeräuschen erreicht werden. Besonders gute Ergebnisse lassen sich erzielen, wenn sich die jeweilige äußere Befestigungslänge in Umfangsrichtung entlang 60° bis 200°, insbesondere 80° bis 120°, erstreckt.

Bei einer weiteren vorteilhaften Ausgestaltung der Erfindung unterteilt sich die jeweilige innere Befestigungslänge in Umfangsrichtung in mehrere, voneinander beabstandete innere Befestigungsabschnitte, vorzugsweise in mindestens drei bzw. höchstens sechs innere Befestigungsabschnitte.

Die jeweilige innere Befestigungslänge kann somit in mehrere einzelne innere Befestigungsabschnitte untergliedert sein, die sich in Umfangsrichtung um den Stator herum verteilen und sich gegenseitig nicht berühren. Bspw. können die inneren Befestigungsabschnitte dabei um einen Schwerpunkt herum angeordnet sein, der entweder mit der Längsachse des Stators zusammenfällt oder diesem - im Vergleich zu dem Außendurchmesser des Stators - recht nahe ist. Da die elektrische Maschine vorzugsweise mit einer waagerecht ausgerichteten Längsachse betrieben wird und der Stator unter Umständen mehrere Tonnen liegen kann, kann dieser Schwerpunkt auch unterhalb der Längsachse des Stators angeordnet sein. Die Unterteilung der der jeweiligen inneren Befestigungslänge in mehrere innere Befestigungsabschnitte erleichtert die Übertragung großer Drehmomente und trägt weiterhin dazu bei, vergleichsweise wenige Schwingungen vom Stator an das jeweilige Aufnahmeelement zu übertragen und somit die Betriebsgeräusche der elektrischen Maschine zu reduzieren.

Die einzelnen inneren Befestigungsabschnitte können sich dabei in Umfangsrichtung bspw. zwischen 10° und 50°, insbesondere zwischen 20° und 40° erstrecken.

Besonders gute Ergebnisse lassen sich erzielen, wenn mindestens drei und/oder höchstens sechs innere Befestigungsabschnitte vorgesehen sind.

Bei dem oben erläuterten Vergleich mit einer Autofelge würden die inneren Befestigungsabschnitte einzelnen Speichen der Felge entsprechen.

Bei einer weiteren vorteilhaften Ausgestaltung der Erfindung unterteilt sich die jeweilige äußere Befestigungslänge in Umfangsrichtung in mehrere, voneinander beabstandete äußere Befestigungsabschnitte unterteilt, vorzugsweise in mindestens zwei bzw. höchstens sechs innere Befestigungsabschnitte.

Die jeweilige äußere Befestigungslänge kann somit in mehrere einzelne äußere Befestigungsabschnitte untergliedert sein, die sich in Umfangsrichtung um das jeweilige Aufnahmeelement herum verteilen und sich gegenseitig nicht berühren. Bspw. können die äußeren Befestigungsabschnitte dabei um einen Schwerpunkt herum angeordnet sein, der entweder mit der Längsachse des Stators zusammenfällt oder diesem - im Vergleich zu dem Außendurchmesser des Stators - recht nahe ist. Da die elektrische Maschine vorzugsweise mit einer waagerecht ausgerichteten Längsachse betrieben wird und der Stator unter Umständen mehrere Tonnen liegen kann, kann dieser Schwerpunkt auch unterhalb der Längsachse des Stators angeordnet sein. Die Unterteilung der der jeweiligen äußeren Befestigungslänge in mehrere äußere Befestigungsabschnitte erleichtert die Übertragung großer Drehmomenten und trägt weiterhin dazu bei, vergleichsweise wenige Schwingungen vom jeweiligen Aufnahmeelement an das Statorgehäuse zu übertragen und somit die Betriebsgeräusche der elektrischen Maschine zu reduzieren.

Die einzelnen äußeren Befestigungsabschnitte können sich dabei in Umfangsrichtung bspw. zwischen 5° und 200°, insbesondere zwischen 40° und 80° erstrecken. Bspw. kann ein recht schmaler, äußerer Befestigungsabschnitt im Querschnitt oben angeordnet sein und sich lediglich entlang 5° bis 20° erstrecken, wobei ein oder zwei breite, äußere Befestigungsabschnitte im Querschnitt unten angeordnet ist bzw. sind. Ist ein solcher breiter, äußerer Befestigungsabschnitte unten vorgesehen, kann dieser sich entlang bis zu 190° erstrecken. Sind zwei solcher breiter, äußerer Befestigungsabschnitte unten vorgesehen, können die sich jeweils entlang 50-80°, bspw. ca. 70° erstrecken und sich dabei im Querschnitt senkrecht zur Längsachse gegenüber liegen.

Besonders gute Ergebnisse lassen sich erzielen, wenn mindestens zwei und/oder höchstens sechs innere Befestigungsabschnitte vorgesehen sind.

Bei dem oben erläuterten Vergleich mit einer Autofelge würden die äußeren Befestigungsabschnitte einzelnen Speichen der Felge entsprechen.

Bei einer weiteren vorteilhaften Ausgestaltung der Erfindung weist die elektrische Maschine dabei mindestens so viele jeweilige innere Befestigungsabschnitte wie jeweilige äußere Befestigungsabschnitte auf, vorzugsweise mehr jeweilige innere Befestigungsabschnitte als jeweilige äußere Befestigungsabschnitte.

Gute Ergebnisse hinsichtlich der Reduktion der Schwingungsübertragung vom Stator an das Statorgehäuse und hinsichtlich Geräuschreduktion lassen sich dadurch erreichen, dass mindestens so viele jeweilige innere Befestigungsabschnitte wie jeweilige äußere Befestigungsabschnitte vorgesehen sind. Besonders gute Ergebnisse lassen sich erzielen, wenn die Anzahl der jeweiligen inneren Befestigungsabschnitte die Anzahl der jeweiligen äußeren Befestigungsabschnitte übersteigt.

Bei einer weiteren vorteilhaften Ausgestaltung der Erfindung ist dabei zumindest einer der jeweiligen inneren Befestigungsabschnitte in Umfangsrichtung versetzt zu den jeweiligen äußeren Befestigungsabschnitten angeordnet, wobei vorzugsweise zwei oder mehr oder alle der jeweiligen inneren Befestigungsabschnitte in Umfangsrichtung versetzt zu den jeweiligen äußeren Befestigungsabschnitten angeordnet sind.

Durch den Versatz in Umfangsrichtung zumindest eines des jeweiligen inneren Befestigungsabschnitten gegenüber den jeweiligen äußeren Befestigungsabschnitte kann erreicht werden, dass das jeweilige Aufnahmeelement besonders gut Schwingungen des Stators absorbieren kann, dabei diese Schwingungen aber nicht an das Statorgehäuse weitergibt. Besonders gut gelingt dies, wenn zwei oder mehr bzw. alle der jeweiligen inneren Befestigungsabschnitte gegenüber den jeweiligen äußeren Befestigungsabschnitte den in Umfangsrichtung versetzt sind.

Vorzugsweise ist der zumindest eine jeweilige innere Befestigungsabschnitt in Umfangsrichtung vollständig gegenüber den jeweiligen äußeren Befestigungsabschnitte versetzt, sodass kein Überlapp vorliegt. Ordentliche Ergebnisse lassen sich jedoch noch immer erzielen, wenn der zumindest eine jeweilige innere Befestigungsabschnitt in Umfangsrichtung überwiegend gegenüber den jeweiligen äußeren Befestigungsabschnitten versetzt ist, d.h. der zumindest eine jeweilige innere Befestigungsabschnitt ist zumindest zur Hälfte seiner Erstreckung in Umfangsrichtung gegenüber den jeweiligen äußeren Befestigungsabschnitte versetzt und überlappt damit weniger als die Hälfte seiner Erstreckung in Umfangsrichtung mit dem jeweiligen äußeren Befestigungsabschnitt.

Bei einer weiteren vorteilhaften Ausgestaltung der Erfindung überlappt dabei zumindest einer der jeweiligen inneren Befestigungsabschnitte in Umfangsrichtung mit zumindest einem der jeweiligen äußeren Befestigungsabschnitte, wobei vorzugsweise zwei oder mehr oder alle der jeweiligen inneren Befestigungsabschnitte in Umfangsrichtung mit zumindest einem der jeweiligen äußeren Befestigungsabschnitte überlappen.

Durch den Überlapp in Umfangsrichtung des zumindest einen jeweiligen inneren Befestigungsabschnittes mit zumindest einem der jeweiligen äußeren Befestigungsabschnitte kann die Übertragung eines ausreichend großen Drehmoments von dem Stator an das jeweilige Aufnahmeelement und schließlich an das Statorgehäuse vereinfacht werden. Je nach Ausgestaltung der elektrischen Maschine kann es dabei vorteilhaft sein, wenn zwei oder mehr oder alle der jeweiligen inneren Befestigungsabschnitte in Umfangsrichtung mit zumindest einem der jeweiligen äußeren Befestigungsabschnitte überlappen.

Oftmals genügt dabei schon ein teilweiser Überlapp zur Übertragung auch großer Drehmomente, insbesondere wenn weniger als die Hälfte der Erstreckung des zumindest einen jeweiligen inneren Befestigungsabschnittes in Umfangsrichtung mit dem jeweiligen äußeren Befestigungsabschnitt überlappt. In einigen Beispielen überlappt der zumindest eine jeweilige innere Befestigungsabschnitt jedoch vollständig in Umfangsrichtung mit zumindest einem der jeweiligen äußeren Befestigungsabschnitte.

Vorzugsweise überlappen dabei nur eine bis zwei jeweiligen inneren Befestigungsabschnitte mit zumindest einem der jeweiligen äußeren Befestigungsabschnitte, wobei zumindest einer der jeweiligen inneren Befestigungsabschnitte mit einem der jeweiligen äußeren Befestigungsabschnitte nicht überlappt.

Bei einer weiteren vorteilhaften Ausgestaltung der Erfindung ist zwischen dem jeweilige Aufnahmeelement und dem Stator außerhalb der jeweiligen inneren Befestigungslänge in radialer Richtung ein innerer Luftspalt angeordnet.

Der innere Luftspalt ist in Umfangsrichtung somit insbesondere je zwischen zwei benachbarten jeweiligen inneren Befestigungsabschnitten angeordnet. Vorzugsweise ist der innere Luftspalt zumindest so groß, wie die radialen Amplituden von während dem Betrieb des Stators auftretenden Schwingungen bzw. Verformungen des Stators. Somit können Schäden vermieden werden, indem sichergestellt wird, dass der Stator während seines Betriebs das jeweilige Aufnahmeelement nicht außerhalb der jeweiligen inneren Befestigungslänge berührt.

Bei einer weiteren vorteilhaften Ausgestaltung der Erfindung ist zwischen dem Statorgehäuse dem jeweiligen Aufnahmeelement außerhalb der jeweiligen äußeren Befestigungslänge in radialer Richtung ein äußerer Luftspalt angeordnet.

Der äußere Luftspalt ist in Umfangsrichtung somit insbesondere je zwischen zwei benachbarten jeweiligen äußeren Befestigungsabschnitten angeordnet. Vorzugsweise ist der äußere Luftspalt zumindest so groß, wie die radialen Amplituden von während dem Betrieb des Stators auftretenden Schwingungen bzw. Verformungen des jeweiligen Aufnahmeelementes. Somit können Schäden vermieden werden, indem sichergestellt wird, dass das jeweilige Aufnahmeelement während des Betriebs des Stators das Statorgehäuse nicht außerhalb der jeweiligen äußeren Befestigungslänge berührt. Insbesondere wird der äußere Luftspalt so klein wie möglich gewählt, damit die zirkulierende Kühlluft so gut wie möglich abgeschottet wird und damit ein Lackieren des äußeren Luftspalts noch möglich ist. Gute Ergebnisse lassen sich mit einem äußeren Luftspalt von 3 mm bis 30 mm erzielen, wobei der Bereich von 7 mm bis 15 mm bevorzugt ist.

Bei einer weiteren vorteilhaften Ausgestaltung der Erfindung weist der Stator einen Außendurchmesser von zumindest 900 mm auf, wobei die elektrische Maschine eine elektrische Leistung von zumindest 1,5 MW aufweist.

Vorzugsweise weist die elektrische Maschine dabei eine Leistung von ca. 5 MW auf. Bspw. der Stator einen Außendurchmesser von ca. 1300 mm. Die elektrische Maschine kann bspw. eine Masse von mehreren Tonnen, insbesondere mehr als 8 t aufweisen.

Bei einer weiteren vorteilhaften Ausgestaltung der Erfindung weist die elektrische Maschine bzw. das Statorgehäuse zumindest eine Auflagevorrichtung, bspw. eine Fußwange und/oder eine Fußaufhängung, auf, mittels welcher das während des Betriebs der elektrischen Maschine auftretende Drehmoment an ein Fundament bzw. an eine Auflagefläche der elektrischen Maschine abgebbar ist. Vorzugsweise ist die jeweilige Auflagevorrichtung auf axialer Höhe zumindest eines der Aufnahmeelemente angeordnet. D. h., bei einem Querschnitt durch die elektrische Maschine senkrecht zur Längsachse werden sowohl eines der Aufnahmeelemente als auch die jeweilige Fußwange bzw. die jeweilige Fußaufhängung geschnitten. Diese Ausgestaltung kann sich als vorteilhaft erweisen, wenn besonders große Drehmomente zu übertragen sind. Bei einigen Ausgestaltungen können vorteilhafte Schwingungseigenschaften und somit eine Geräuschreduzierung während des Betriebs erreicht werden, wenn die jeweilige Auflagevorrichtung in axialer Richtung versetzt zu den Aufnahmeelementen angeordnet ist, bspw. ca. in der Mitte zwischen zwei benachbarten Aufnahmeelementen.

Die vorgeschlagene Windkraftanlage weist insbesondere einen Turm und eine Gondel auf, in welcher die elektrische Maschine untergebracht ist. Weiterhin weist die Windkraftanlage insbesondere drei Propellerblätter auf, welche drehfest mit dem Rotor der elektrischen Maschine verbunden sind. Vorzugsweise ist die elektrische Maschine dabei als elektrischer Generator ausgestaltet.

Im Folgenden wird die Erfindung anhand der in den Figuren dargestellten Ausführungsbeispiele näher beschrieben und erläutert. Es zeigen:
- FIG 1-3: eine beispielhafte elektrische Maschine gemäß dem Stand der Technik,
- FIG 4-8: ein erstes Ausführungsbeispiel der vorgeschlagenen elektrischen Maschine,
- FIG 9: ein Aufnahmeelement des ersten Ausführungsbeispiels der vorgeschlagenen elektrischen Maschine,
- FIG 10: ein zweites Ausführungsbeispiel der vorgeschlagenen elektrischen Maschine,
- FIG 11: ein drittes Ausführungsbeispiel der vorgeschlagenen elektrischen Maschine,
- FIG 12: ein viertes Ausführungsbeispiel der vorgeschlagenen elektrischen Maschine,
- FIG 13: ein fünftes Ausführungsbeispiel der vorgeschlagenen elektrischen Maschine, und
- FIG 14: ein Ausführungsbeispiel der vorgeschlagenen Windkraftanlage.

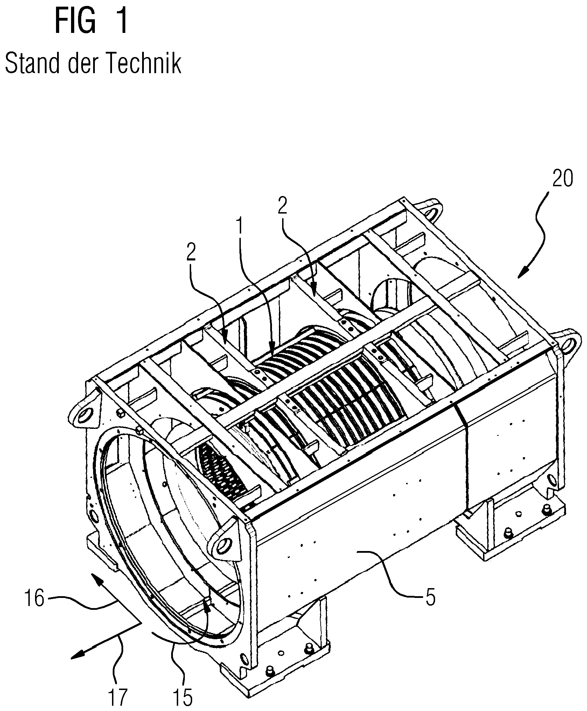

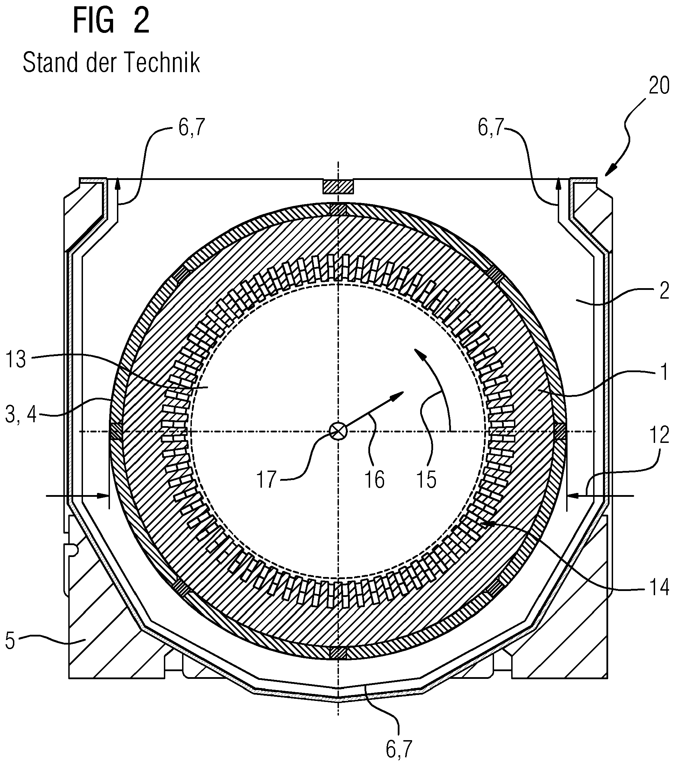

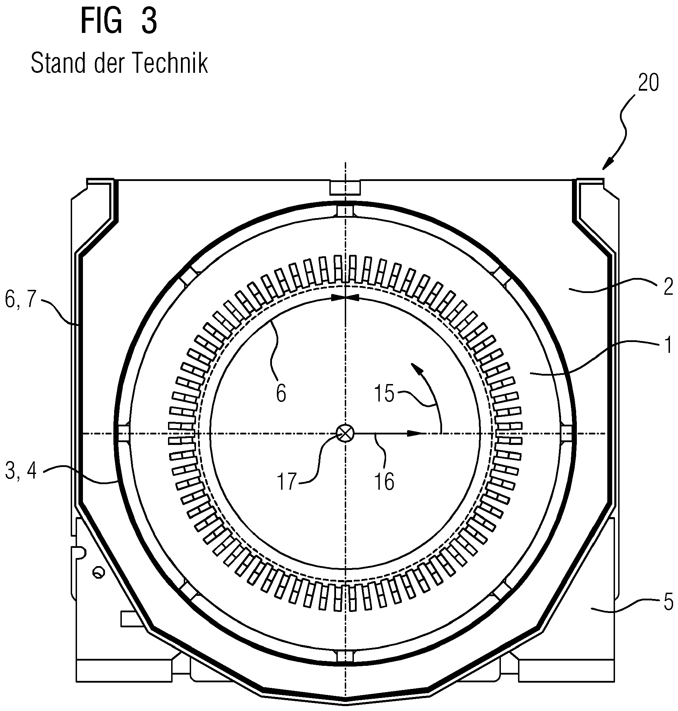

Die Figuren 1 bis 3 zeigen eine beispielhafte elektrische Maschine 20 gemäß dem Stand der Technik. Dabei zeigt die Figur 1 eine perspektivische Ansicht der elektrischen Maschine 20 von seitlich oben und die Figuren 2 und 3 zeigen einen Querschnitt durch die elektrische Maschine 20 senkrecht zur Längsachse und zur axialen Richtung 17 auf Höhe einer der beiden Aufnahmeelemente 2.

Die elektrische Maschine 20 weist einen hohlzylinderförmigen Stator 1 auf, in welchem üblicherweise ein Rotor 13 drehbar gelagert ist, wie in Figur 2 durch die gestrichelte Linie angedeutet. Der Rotor 13 ist dabei in radialer Richtung 16 innerhalb des Stators 1 angeordnet, welcher einen Außendurchmesser 12 aufweist. Weiterhin weist die elektrische Maschine 20 zwei Aufnahmeelemente 2 auf, die den Stator 1 jeweils in Umfangsrichtung 15 vollständig umschließen und dabei in Umfangsrichtung 15 durchgehend, d. h. über den vollen Umfang, mit dem Stator 1 verbunden sind. Die beiden Aufnahmeelemente 2 sind dabei in axialer Richtung 17 versetzt zueinander angeordnet. Die genannte Verbindung wird üblicherweise durch eine Verschweißung des Stators 1 mit dem jeweiligen Aufnahmeelement 2 erreicht. Die jeweilige innere Abdeckungslänge 3, entlang welcher das jeweilige Aufnahmeelement 2 den Stator 1 in Umfangsrichtung 15 umschließt, entspricht somit dem vollen Umfang von 360°. Dasselbe gilt für die jeweilige innere Befestigungslänge 4, entlang welcher das jeweilige Aufnahmeelement 2 mit dem Stator 1 verbunden ist.

Die elektrische Maschine 20 weist ferner ein Statorgehäuse 5 auf, welches das jeweilige Aufnahmeelement 2 und damit dem Stator 1 in Umfangsrichtung 15 oftmals vollständig oder zumindest überwiegend umschließt. Bei der elektrischen Maschine 20, die in den Figuren 1 bis 3 dargestellt ist, umschließt das Statorgehäuse 5 das jeweilige Aufnahmeelement 2 entlang einer jeweiligen äußeren Abdeckungslänge 6, welche etwa drei Vierteln des vollen Umfangs, d. h. ca. 270°, entspricht. Dabei ist das Statorgehäuse 5 mit dem jeweiligen Aufnahmeelement 2 entlang einer jeweiligen äußeren Befestigungslänge 7 verbunden, welche der äußeren Abdeckungslänge 6 entspricht und somit ebenfalls etwa drei Viertel des vollen Umfangs, d. h. ca. 270°, entspricht.

Der Stator 1 weist dabei in radialer Richtung 16 eingebrachte Nuten auf, in welche üblicherweise die Statorwicklungen eingebracht sind.

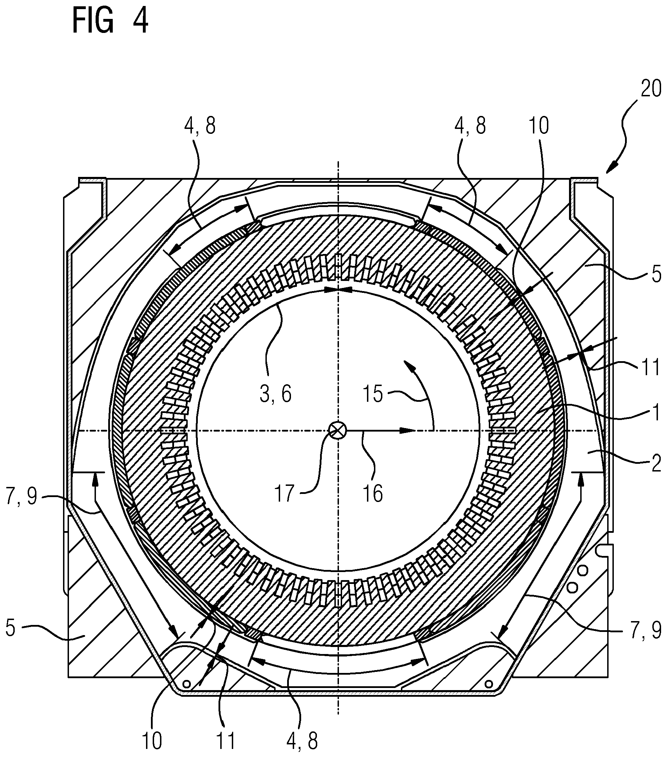

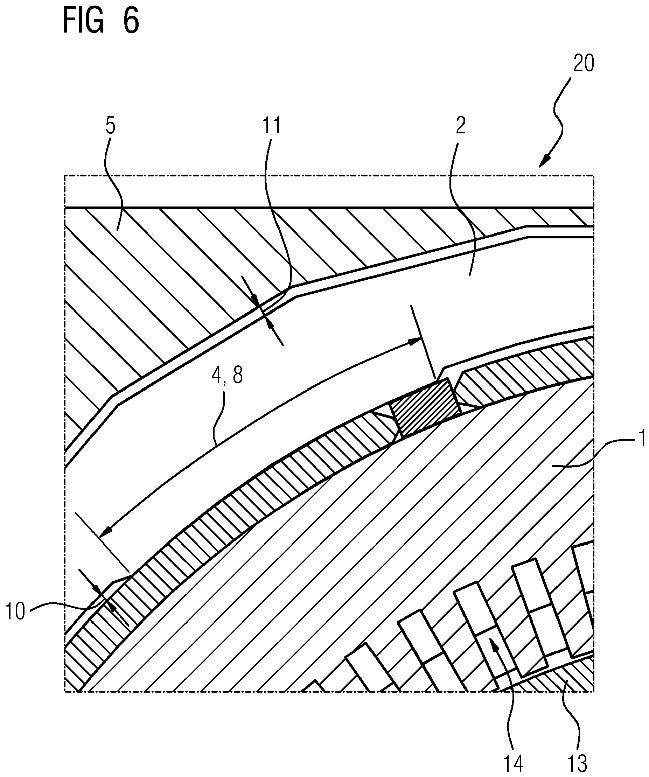

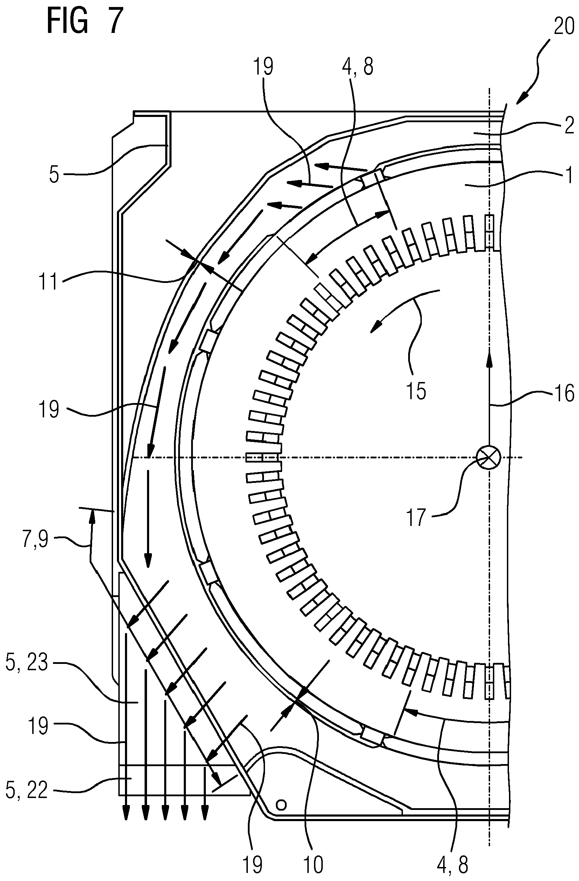

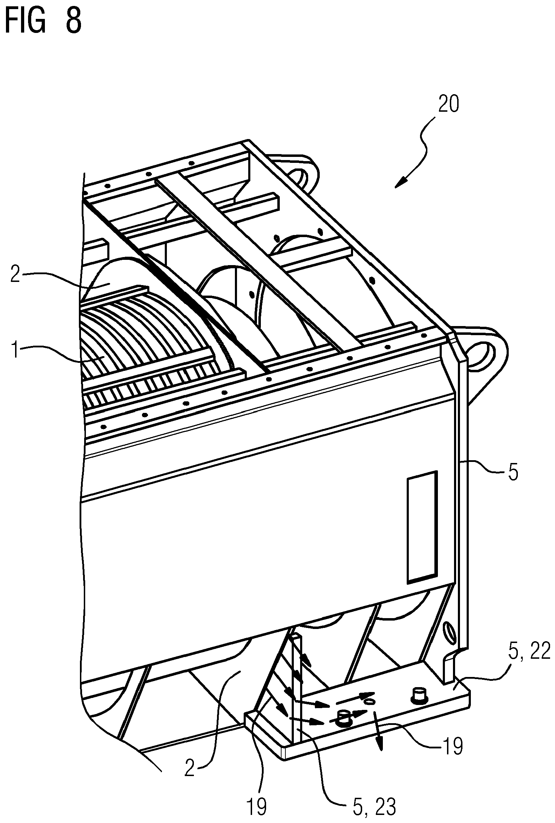

Die Figuren 4 bis 8 zeigen ein erstes Ausführungsbeispiel der vorgeschlagenen elektrischen Maschine 20, wobei gleiche Bezugszeichen wie in Figur 1 gleiche Gegenstände bezeichnen. Dabei zeigen die Figuren 4 bis 7 einen Querschnitt durch die elektrische Maschine 20 senkrecht zur Längsachse und zur axialen Richtung 17 auf Höhe einer der beiden Aufnahmeelemente 2. Die Figuren 6 und 7 zeigen dabei zwei verschiedene Ausschnitte dieser Ansicht und Figur 8 zeigt eine perspektivische Ansicht der elektrischen Maschine 20.

Bei der elektrischen Maschine 20 umschließt das Gehäuse 5 das Aufnahmeelement 2 in Umfangsrichtung vollständig, sodass sich die äußere Abdeckungslänge 6 über den vollen Umfang von 360° erstreckt. Die elektrische Maschine 2 kann dabei zwei oder mehr solcher Aufnahmeelemente 2 aufweisen. Weiterhin umschließt das dargestellte Aufnahmeelement 2 den Stator 1 in Umfangsrichtung ebenfalls vollständig, sodass sich die innere Abdeckungslänge 3 ebenfalls über den vollen Umfang von 360° erstreckt.

Die elektrische Maschine 20 zeichnet sich unter anderem dadurch aus, dass sich die innere Befestigungslänge 4, entlang welcher das jeweilige Aufnahmeelement 2 mit dem Stator 1 verbunden ist, höchstens entlang der Hälfte der jeweiligen inneren Abdeckungslänge 3 erstreckt. Dabei erstreckt sich die innere Befestigungslänge 4 bei der dargestellten elektrischen Maschine 20 über etwa 80°, d. h. etwas weniger als ein Viertel des vollen Umfangs. Die innere Befestigungslänge 4 ist dabei in drei innere Befestigungsabschnitte 8 unterteilt, von denen einer zentral unten angeordnet ist und sich über ca. 40° erstreckt und von denen die anderen beiden jeweils oben leicht versetzt zur Mitte angeordnet sind und sich jeweils über ca. 20° erstrecken. Die innere Befestigungslänge 4 ist somit in Umfangsrichtung 15 in die drei inneren Befestigungsabschnitte 8 unterteilt, die in Umfangsrichtung 15 voneinander beabstandet angeordnet sind.

Insbesondere ist somit zwischen dem jeweiligen Aufnahmeelement 2 und dem Stator 1 außerhalb der jeweiligen inneren Befestigungslänge 4 in radialer Richtung 16 ein jeweiliger innerer Luftspalt 10 angeordnet.

Weiterhin zeichnet sich die dargestellte elektrische Maschine 20 unter anderem dadurch aus, dass sich die äußere Befestigungslänge 7, entlang welcher das Statorgehäuse 5 mit dem jeweiligen Aufnahmeelement 2 verbunden ist, höchstens entlang von zwei Dritteln der jeweiligen äußeren Abdeckungslänge 6 erstreckt. Dabei erstreckt sich die äußere Befestigungslänge 7 bei der dargestellten elektrischen Maschine 20 über etwa 90°, d. h. etwa ein Viertel des vollen Umfangs. Die äußere Befestigungslänge 7 ist dabei in zwei äußere Befestigungsabschnitte 9 unterteilt, die beide rechts unten bzw. links unten angeordnet sind und sich jeweils über ca. 45° erstrecken. Die äußere Befestigungslänge 7 ist somit in Umfangsrichtung 15 in die beiden äußeren Befestigungsabschnitte 9 unterteilt, die in Umfangsrichtung 15 voneinander beanstandet angeordnet sind.

Insbesondere ist somit zwischen dem Statorgehäuse 5 und dem jeweiligen Aufnahmeelement 2 außerhalb der jeweiligen äußeren Befestigungslänge 7 in radialer Richtung 16 ein äußerer Luftspalt 11 angeordnet.

Somit weist die elektrische Maschine 20 mehr jeweilige innere Befestigungsabschnitte 8 als jeweilige äußere Befestigungsabschnitte 9 auf.

Weiterhin sind bei der elektrischen Maschine 20 die jeweiligen inneren Befestigungsabschnitte 8 in Umfangsrichtung 15 versetzt zu den jeweiligen äußeren Befestigungsabschnitten 9 angeordnet. Das bedeutet, dass die jeweiligen inneren Befestigungsabschnitte 8 in Umfangsrichtung 15 nicht mit einem der äußeren Befestigungsabschnitte 9 überlappen.

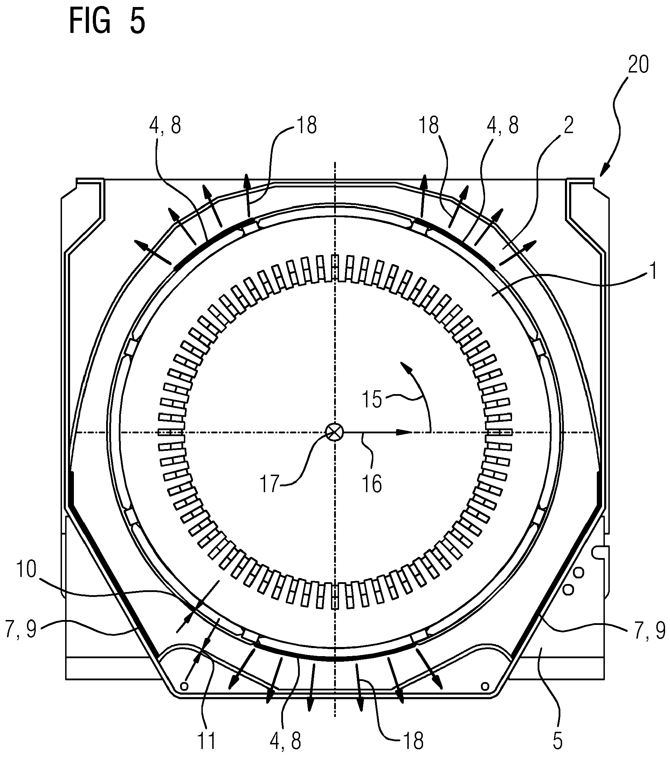

Wie in Figur 5 mit den Pfeilen 18 angedeutet, kann das jeweilige Aufnahmeelement 2 im Bereich des jeweiligen inneren Befestigungsabschnittes 8 in radialer Richtung 16 nach außen schwingen, wobei diese Schwingungen nicht direkt an das Statorgehäuse 5 weitergegeben werden, da die jeweiligen inneren Befestigungsabschnitte 8 in Umfangsrichtung 15 nicht mit einem der äußeren Befestigungsabschnitte 9 überlappen.

Das jeweilige Aufnahmeelement 2 ist dabei als Aufnahmering ausgestaltet, welcher den Stator 1 in Umfangsrichtung 15 vollständig umschließt.

Vorzugsweise ist das jeweilige Aufnahmeelement 2 im Bereich der jeweiligen inneren Befestigungslänge 4 mit dem Stator 1 verschweißt. Insbesondere ist das Statorgehäuse 5 im Bereich der jeweiligen äußeren Befestigungslänge 7 mit dem jeweiligen Aufnahmeelement 2 verschweißt.

Insbesondere weist die elektrische Maschine 20 eine elektrische Leistung von zumindest 1,5 MW auf, wobei der Stator 1 vorzugsweise einen Außendurchmesser von zumindest 900 mm aufweist.

Wie in den Figuren 7 und 8 mit den Pfeilen 19 angedeutet, kann während des Betriebs der elektrischen Maschine 20 Drehmoment vom Stator 1 an das jeweilige Aufnahmeelement 2 und schließlich das Gehäuse 5 übertragen werden, wobei das Gehäuse 5 (in Figur 7 links unten) eine Fußwange 23 und eine Fußaufhängung 22 aufweist, die das Drehmoment aufnehmen und schließlich an das darunter befindliche Fundament der elektrischen Maschine 20 abgeben. Die Fußwange 23 und die Fußaufhängung 22 werden dabei als Teil des Statorgehäuses 5 angesehen. Insbesondere handelt es sich bei der Fußwange 23 und der Fußaufhängung 22 um die oben erläuterte Auflagevorrichtung. Wie in den Figuren 7 und 8 zu sehen ist, ist diese Auflagevorrichtung auf axialer Höhe des dargestellten Aufnahmeelementes 2 angeordnet. Alternativ ist auch denkbar, dass die Auflagevorrichtung in axialer Richtung 17 versetzt zu dem Aufnahmeelement 2 angeordnet ist, bspw. ca. in der Mitte zwischen zwei benachbarten Aufnahmeelementen 2.

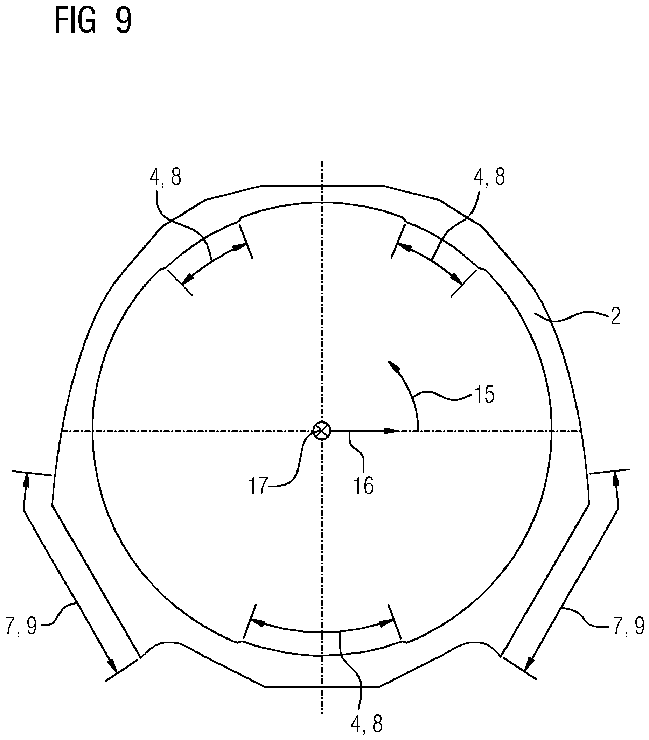

Figur 9 zeigt ein Aufnahmeelement 2 des ersten Ausführungsbeispiels der vorgeschlagenen elektrischen Maschine 20.

Gut zu erkennen ist, dass sich das Aufnahmeelement 2 im Bereich der inneren Befestigungslänge 4 bzw. der drei inneren Befestigungsabschnitte 8 weiter nach radial innen erstreckt als an den Bereichen zwischen den inneren Befestigungsabschnitten 8. Dadurch liegt das Aufnahmeelement 2 an den inneren Befestigungsabschnitten 8 von radial außen an dem passend dimensionierten, hohlzylindrischen Stator 1 auf und kann leicht mit diesem verbunden, bspw. verschweißt, werden. Bei den Bereichen zwischen den inneren Befestigungsabschnitte 8 bildet sich damit ein innerer Luftspalt 10, der weiter oben schon erläutert wurde. Dargestellt sind auch die äußere Befestigungslänge 7 bzw. die beiden äußeren Befestigungsabschnitte 9. In Umfangsrichtung zwischen den beiden äußeren Befestigungsabschnitten 9 bildet sich ein äußerer Luftspalt 11 zwischen dem Aufnahmeelement 2 und dem Statorgehäuse 5.

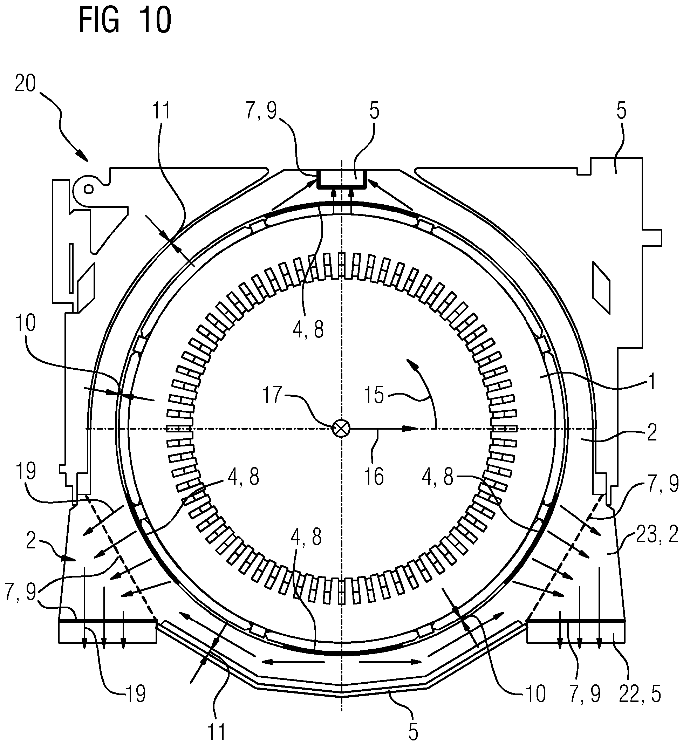

Die Figur 10 zeigt ein zweites Ausführungsbeispiel der vorgeschlagenen elektrischen Maschine 20. Die elektrische Maschine 20 weist wiederum eine Fußwange 23 sowie eine Fußaufhängung 22 auf, wobei die Fußwange 23 einstückig mit dem übrigen, jeweiligen Aufnahmeelement 2 ausgebildet ist und die Fußaufhängung 22 als Teil des Statorgehäuses 5 angesehen wird.

Die dargestellte elektrische Maschine 20 zeichnet sich unter anderem dadurch aus, dass sich die innere Befestigungslänge 4 entlang etwa 110° der jeweiligen inneren Abdeckungslänge 3 erstreckt, wobei sich die jeweilige innere Abdeckungslänge 3 um den vollen Umfang, also 360°, erstreckt. Die innere Befestigungslänge 4 ist dabei in vier innere Befestigungsabschnitte 8 unterteilt, von denen zwei zentral oben bzw. unten angeordnet sind und sich jeweils über ca. 30° bis 40° erstrecken und von denen die anderen beiden jeweils unten leicht versetzt zur Mitte angeordnet sind und sich jeweils über ca. 20° bis 30° erstrecken. Die innere Befestigungslänge 4 ist somit in Umfangsrichtung 15 in die vier inneren Befestigungsabschnitte 8 unterteilt, die in Umfangsrichtung 15 voneinander beabstandet angeordnet sind.

Insbesondere ist somit zwischen dem jeweiligen Aufnahmeelement 2 und dem Stator 1 außerhalb der jeweiligen inneren Befestigungslänge 4 in radialer Richtung 16 ein jeweiliger innerer Luftspalt 10 angeordnet.

Weiterhin zeichnet sich die dargestellte elektrische Maschine 20 unter anderem dadurch aus, dass sich die äußere Befestigungslänge 6 entlang etwa 80° erstreckt und sich die jeweiligen äußeren Abdeckungslänge 7 etwa entlang 340°, d.h. beinahe vollständig um das jeweilige Aufnahmeelement 2 herum, erstreckt. Dabei sind in Figur 10 einige Gehäuseteile, insb. in den beiden Bereichen rechts und links unten nicht dargestellt. Die äußere Befestigungslänge 7 ist dabei in drei äußere Befestigungsabschnitte 9 unterteilt, von denen eine mittig oben angeordnet ist und sich über ca. 10° erstreckt und von denen die beiden anderen rechts unten bzw. links unten angeordnet sind und sich jeweils über ca. 30° bis 40° erstrecken. Die äußere Befestigungslänge 7 ist somit in Umfangsrichtung 15 in die drei äußeren Befestigungsabschnitte 9 unterteilt, die in Umfangsrichtung 15 voneinander beanstandet angeordnet sind.

Insbesondere ist somit zwischen dem Statorgehäuse 5 und dem jeweiligen Aufnahmeelement 2 außerhalb der jeweiligen äußeren Befestigungslänge 7 in radialer Richtung 16 ein äußerer Luftspalt 11 angeordnet.

Somit weist die elektrische Maschine 20 mehr jeweilige innere Befestigungsabschnitte 8 als jeweilige äußere Befestigungsabschnitte 9 auf.

Weiterhin ist bei der elektrischen Maschine 20 der jeweilige innere Befestigungsabschnitt 8 unten in der Mitte in Umfangsrichtung 15 versetzt zu den jeweiligen äußeren Befestigungsabschnitte und 9 angeordnet. Das bedeutet, dass dieser jeweilige inneren Befestigungsabschnitt 8 in Umfangsrichtung 15 nicht mit einem der äußeren Befestigungsabschnitte 9 überlappt. Der jeweilige innere Befestigungsabschnitt 8 oben in der Mitte überlappt teilweise mit dem jeweiligen äußeren Befestigungsabschnitt 9, der ebenfalls oben in der Mitte angeordnet ist. Auch die weiteren jeweiligen inneren Befestigungsabschnitte 8 unten rechts und links überlappen teilweise mit den jeweiligen äußeren Befestigungsabschnitten 9, die ebenfalls unten rechts und unten links angeordnet sind.

Insbesondere handelt es sich bei der Fußwange 23 und der Fußaufhängung 22 um die oben erläuterte Auflagevorrichtung. Wie in der Figur 20 sehen ist, ist diese Auflagevorrichtung auf axialer Höhe des dargestellten Aufnahmeelementes 2 angeordnet. Alternativ ist auch denkbar, dass die Auflagevorrichtung in axialer Richtung 17 versetzt zu dem Aufnahmeelement 2 angeordnet ist, bspw. ca. in der Mitte zwischen zwei benachbarten Aufnahmeelementen 2.

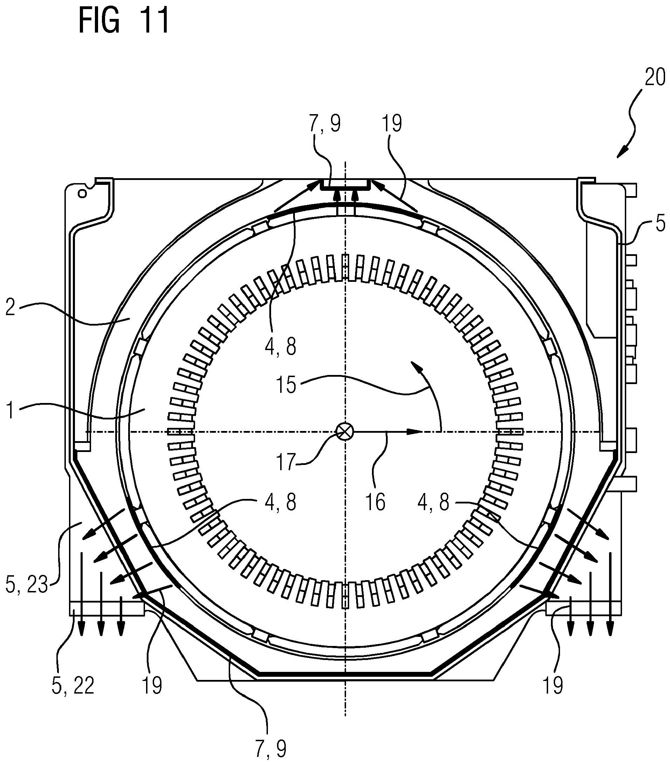

Die Figur 11 zeigt ein drittes Ausführungsbeispiel der vorgeschlagenen elektrischen Maschine.

Die dargestellte elektrische Maschine 20 zeichnet sich unter anderem dadurch aus, dass sich die innere Befestigungslänge 4 entlang etwa 90° der jeweiligen inneren Abdeckungslänge 3 erstreckt, wobei sich die jeweilige innere Abdeckungslänge 3 um den vollen Umfang, also 360°, erstreckt. Die innere Befestigungslänge 4 ist dabei in drei innere Befestigungsabschnitte 8 unterteilt, von denen einer zentral oben angeordnet ist und sich über ca. 30° bis 40° erstreckt und von denen die anderen beiden jeweils unten rechts und links angeordnet sind und sich jeweils über ca. 20° bis 30° erstrecken. Die innere Befestigungslänge 4 ist somit in Umfangsrichtung 15 in die drei inneren Befestigungsabschnitte 8 unterteilt, die in Umfangsrichtung 15 voneinander beabstandet angeordnet sind.

Weiterhin zeichnet sich die dargestellte elektrische Maschine 20 unter anderem dadurch aus, dass sich die äußere Befestigungslänge 6 entlang etwa 190° erstreckt und sich die jeweiligen äußeren Abdeckungslänge 7 um den vollen Umfang, d. h. 360°, erstreckt. Die äußere Befestigungslänge 7 ist dabei in zwei äußere Befestigungsabschnitte 9 unterteilt, von denen einer mittig oben angeordnet ist und sich über ca. 10° erstreckt und von denen der andere zentral unten angeordnet ist und sich über ca. 180° erstreckt. Die äußere Befestigungslänge 7 ist somit in Umfangsrichtung 15 in die zwei äußeren Befestigungsabschnitte 9 unterteilt, die in Umfangsrichtung 15 voneinander beanstandet angeordnet sind. Alternativ ist denkbar, dass sich die äußere Befestigungslänge 6 entlang etwa lediglich 180° erstreckt und dabei nur den unten angeordneten äußere Befestigungslänge 7 aufweist, der sich über ca. 180° erstreckt.

Somit weist die elektrische Maschine 20 (bei beiden Alternativen) mehr jeweilige innere Befestigungsabschnitte 8 als jeweilige äußere Befestigungsabschnitte 9 auf.

Dabei überlappen die beiden jeweilige innere Befestigungsabschnitt 8 unten rechts und links in Umfangsrichtung 15 vollständig mit dem zentral unten angeordneten jeweiligen äußeren Befestigungsabschnitt 9. Ferner überlappt der jeweilige innere Befestigungsabschnitt 8 oben in Umfangsrichtung 15 teilweise mit dem zentral oben angeordneten jeweiligen äußeren Befestigungsabschnitt 9, sofern dieser äußere Befestigungsabschnitt 9 vorgesehen ist.

Insbesondere handelt es sich bei der Fußwange 23 und der Fußaufhängung 22 um die oben erläuterte Auflagevorrichtung. Wie in der Figur 20 sehen ist, ist diese Auflagevorrichtung auf axialer Höhe des dargestellten Aufnahmeelementes 2 angeordnet. Alternativ ist auch denkbar, dass die Auflagevorrichtung in axialer Richtung 17 versetzt zu dem Aufnahmeelement 2 angeordnet ist, bspw. ca. in der Mitte zwischen zwei benachbarten Aufnahmeelementen 2.

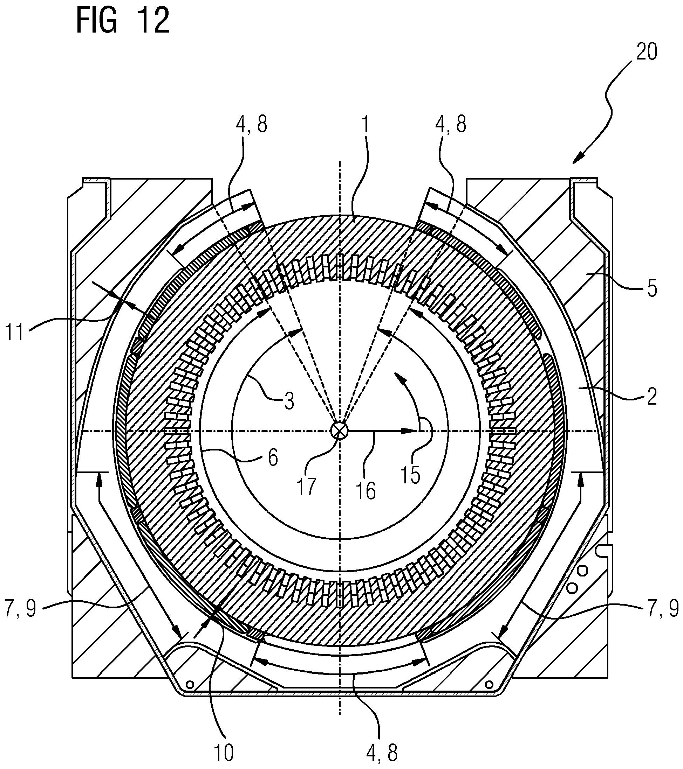

Die Figur 12 zeigt ein viertes Ausführungsbeispiel der vorgeschlagenen elektrischen Maschine 20. Die dargestellte elektrische Maschine 20 weist dabei einige Ähnlichkeiten zum ersten Ausführungsbeispiel auf. Allerdings erstreckt sich das Statorgehäuse 5 in Umfangsrichtung 15 nicht mehr vollständig um den Stator 1, sondern lediglich entlang ca. 300°. Auch das jeweilige Aufnahmeelement 2 erstreckt sich in Umfangsrichtung nicht mehr vollständig um den Stator 1, sondern lediglich entlang ca. 320°.

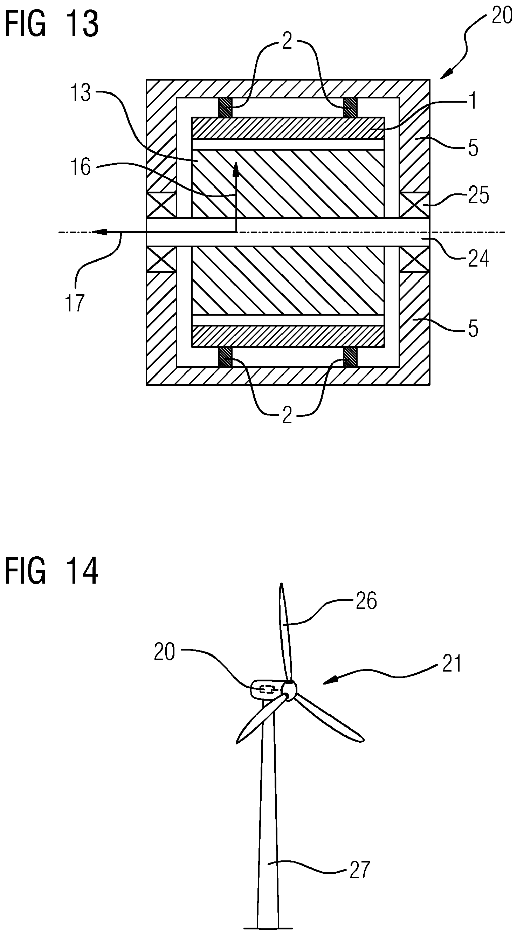

Die Figur 13 zeigt ein fünftes Ausführungsbeispiel der vorgeschlagenen elektrischen Maschine 20. Dargestellt ist dabei ein Längsschnitt entlang der axialen Richtung 17 der elektrischen Maschine 20. Die elektrische Maschine 20 weist einen Rotor 13 auf, der drehfest mit einer Welle 24 verbunden ist. Die Welle 24 ist über Lager 25 drehbar in einem Statorgehäuse 5 gelagert, in welchem zwei Aufnahmeelemente 2 und der hohlzylinderförmiger Stator 1 angeordnet sind. Der Stator 1, die Aufnahmeelemente 2 und das Statorgehäuse 5 können dabei wie oben erläutert ausgestaltet sein.

Vorzugsweise handelt es sich bei der elektrischen Maschine 20 um einen elektrischen Generator, der bei einer Windkraftanlage zum Einsatz kommt.

Die Figur 14 zeigt ein Ausführungsbeispiel der vorgeschlagenen Windkraftanlage 21. Die Windkraftanlage 21 weist einen Turm 27 auf, auf welchem eine Gondel mit einer elektrischen Maschine 20 drehbar gelagert ist. Die elektrische Maschine 20 bzw. ihr Rotor 13 ist drehfest mit einem Propeller aufweisend drei Propellerblätter 26 verbunden.

## Patentansprüche

1. Elektrische Maschine (20), insbesondere elektrischer Generator für eine Windkraftanlage (21), aufweisend
- einen hohlzylinderförmigen Stator (1),
- zumindest zwei Aufnahmeelemente (2),
wobei das jeweilige Aufnahmeelement (2) den Stator (1) jeweils in Umfangsrichtung (15) entlang einer jeweiligen inneren Abdeckungslänge (3) zumindest teilweise umschließt und wobei das jeweilige Aufnahmeelement (2) in Umfangsrichtung (15) entlang einer jeweiligen inneren Befestigungslänge (4) drehfest mit dem Stator (1) verbunden ist, und
- ein Statorgehäuse (5),
wobei das Statorgehäuse (5) das jeweilige Aufnahmeelement (2) in Umfangsrichtung (15) entlang einer jeweiligen äußeren Abdeckungslänge (6) zumindest teilweise umschließt und
wobei das Statorgehäuse (5) in Umfangsrichtung (15) entlang einer jeweiligen äußeren Befestigungslänge (7) drehfest mit dem jeweiligen Aufnahmeelement (2) verbunden ist,
**dadurch gekennzeichnet, dass**
- sich die jeweilige innere Befestigungslänge (4) höchstens entlang der Hälfte der jeweiligen inneren Abdeckungslänge (3) erstreckt und/oder
- sich die jeweilige äußere Befestigungslänge (7) höchstens entlang von zwei Dritteln der jeweiligen äußeren Abdeckungslänge (6) erstreckt.

2. Elektrische Maschine (20) nach Anspruch 1,
wobei das jeweilige Aufnahmeelement (2) als Aufnahmering ausgestaltet ist, welcher den Stator (1) in Umfangsrichtung vollständig umschließt.

3. Elektrische Maschine (20) nach einem der vorherigen Ansprüche,
wobei das jeweilige Aufnahmeelement (2) in Umfangsrichtung (15) entlang der jeweiligen inneren Befestigungslänge (4) mit dem Stator (1) mechanisch lösbar und/oder formschlüssig verbunden ist.

4. Elektrische Maschine (20) nach einem der vorherigen Ansprüche,
wobei das Statorgehäuse (5) in Umfangsrichtung (15) entlang der jeweiligen äußeren Befestigungslänge (7) mit dem jeweiligen Aufnahmeelement (2) mechanisch lösbar oder stoffschlüssig verbunden, insbesondere verschweißt, ist.

5. Elektrische Maschine (20) nach einem der vorherigen Ansprüche,
wobei sich die jeweilige innere Befestigungslänge (4) höchstens entlang 120°, insbesondere entlang 50° bis 80°, in Umfangsrichtung (15) erstreckt.

6. Elektrische Maschine (20) nach einem der vorherigen Ansprüche,
wobei sich die jeweilige äußere Befestigungslänge (7) höchstens entlang 200°, insbesondere entlang 60° bis 200° bzw. 80° bis 120°, in Umfangsrichtung (15) erstreckt.

7. Elektrische Maschine (20) nach einem der vorherigen Ansprüche,
wobei sich die jeweilige innere Befestigungslänge (4) in Umfangsrichtung (15) in mehrere, voneinander beabstandete innere Befestigungsabschnitte (8) unterteilt, vorzugsweise in mindestens drei bzw. höchstens sechs innere Befestigungsabschnitte (8).

8. Elektrische Maschine (20) nach einem der vorherigen Ansprüche,
wobei sich die jeweilige äußere Befestigungslänge (7) in Umfangsrichtung (15) in mehrere, voneinander beabstandete äußere Befestigungsabschnitte (9) unterteilt, vorzugsweise in mindestens zwei bzw. höchstens sechs innere Befestigungsabschnitte (9).

9. Elektrische Maschine (20) nach den Ansprüchen 7 und 8, aufweisend mindestens so viele jeweilige innere Befestigungsabschnitte (8) wie jeweilige äußere Befestigungsabschnitte (9), vorzugsweise mehr jeweilige innere Befestigungsabschnitte (8) als jeweilige äußere Befestigungsabschnitte (9).

10. Elektrische Maschine (20) nach den Ansprüchen 7 und 8 oder nach Anspruch 9,
wobei zumindest einer der jeweiligen inneren Befestigungsabschnitte (8) in Umfangsrichtung (15) versetzt zu den jeweiligen äußeren Befestigungsabschnitten (9) angeordnet ist, wobei vorzugsweise zwei oder mehr oder alle der jeweiligen inneren Befestigungsabschnitte (8) in Umfangsrichtung (15) versetzt zu den jeweiligen äußeren Befestigungsabschnitten (9) angeordnet sind.

11. Elektrische Maschine (20) nach den Ansprüchen 7 und 8 oder nach Anspruch 9 oder 10,
wobei zumindest einer der jeweiligen inneren Befestigungsabschnitte (8) in Umfangsrichtung (15) mit zumindest einem der jeweiligen äußeren Befestigungsabschnitte (9) überlappt, wobei vorzugsweise zwei oder mehr oder alle der jeweiligen inneren Befestigungsabschnitte (8) in Umfangsrichtung (15) mit zumindest einem der jeweiligen äußeren Befestigungsabschnitte (9) überlappen.

12. Elektrische Maschine (20) nach einem der vorherigen Ansprüche,
wobei zwischen dem jeweilige Aufnahmeelement (2) und dem Stator (1) außerhalb der jeweiligen inneren Befestigungslänge (4) in radialer Richtung (16) ein innerer Luftspalt (10) angeordnet ist.

13. Elektrische Maschine (20) nach einem der vorherigen Ansprüche,
wobei zwischen dem Statorgehäuse (5) dem jeweiligen Aufnahmeelement (2) außerhalb der jeweiligen äußeren Befestigungslänge (7) in radialer Richtung (16) ein äußerer Luftspalt (11) angeordnet ist.

14. Elektrische Maschine (20) nach einem der vorherigen Ansprüche,
wobei der Stator (1) einen Außendurchmesser (12) von zumindest 900 mm aufweist und
wobei die elektrische Maschine (20) eine elektrische Leistung von zumindest 1,5 MW aufweist.

15. Windkraftanlage (21) aufweisend eine elektrische Maschine (20) nach einem der vorherigen Ansprüche.
